# EUROPÄISCHE PATENTSCHRIFT

(11) **EP 2 959 023 B1**
(45) Veröffentlichungstag und Bekanntmachung des Hinweises auf die Patenterteilung: **23.09.2020**
(21) Anmeldenummer: 14703863.2
(22) Anmeldetag: 12.02.2014
(51) Int. Cl.: C14C 11/00, C08G 18/08, C08G 18/66, C09D 175/04, C08G 18/76, C08G 18/12, C08K 5/17, C09D 175/08

(54) **VERFAHREN ZUR HERSTELLUNG VON WÄSSRIGEN POLYURETHANZUBEREITUNGEN**
PROCESS FOR PREPARING AQUEOUS DISPERSIONS OF POLYURETHANES
PROCÉDÉ DE PRÉPARATION DE DISPERSIONS AQUEUSES DE POLYURÉTHANES

(30) Priorität: 22.02.2013 EP 13156341
(43) Veröffentlichungstag der Anmeldung: 30.12.2015
(73) Patentinhaber: BASF SE, 67056 Ludwigshafen am Rhein (DE)
(72) Erfinder: ADAMS, Stefan, 67065 Ludwigshafen (DE); BACH, Volker, CH-4056 Basel (CH); HÄBERLE, Karl, 67346 Speyer (DE); TREIBER, Reinhard, 69181 Leimen (DE)
(74) Vertreter: BASF IP Association
(86) Internationale Anmeldenummer: PCT/EP2014/052686
(87) Internationale Veröffentlichungsnummer: WO 2014/128031

(56) Entgegenhaltungen:
- EP-A2- 0 441 196
- WO-A1-2011/121679
- DE-A1- 19 824 484

## Beschreibung

Die vorliegende Erfindung betrifft ein Verfahren zur Herstellung von wässrigen Polyurethandispersionen sowie deren Verwendung als Haftgrundierung für Zurichtungen insbesondere auf gefetteten und/oder hydrophobierten Ledern.

Als Lederzurichtung wird die Schutzschicht bezeichnet, die auf das nach der Gerbung, Fettung und/oder Hydrophobierung getrocknete Leder aufgebracht wird, um das Leder insbesondere gegen Verschmutzung und Beschädigung zu schützen oder die Oberflächeneigenschaften des Leders im Hinblick auf Eigenschaften wie Farbe oder Glanz zu modifizieren. Die Versetzung des Leders mit Fettungs- und/oder Hydrophobiermitteln verleiht dem Leder die gewünschte Weichheit sowie das gewünschte wasserabweisende Verhalten. Unter anderem wird von einer Lederzurichtung verlangt, daß sie auf dem Leder gut haftet. Insbesondere bei stark gefetteten und/oder hydrophobierten Ledern ist die Haftung der meisten Lederzurichtsysteme jedoch nicht befriedigend. Gefragt sind daher Lederzurichthilfsmittel, die vor der eigentlichen Lederzurichtung als sogenannter Haftgrund auf das gefettete und/oder hydrophobierte Leder aufgebracht werden und die der nachfolgend aufgebrachten Lederzurichtung eine erhöhte Haftfestigkeit verleihen, ohne gleichzeitig die Wirkung der Fettung und/oder Hydrophobierung wesentlich zu mindern.

Die DE 198 24 484 A1 beschreibt die Herstellung von wässrigen Polyurethandispersionen. Hierbei werden in einem Polyurethanpolymer vor dessen Dispergierung 65 bis 95 mol% der Säuregruppen neutralisiert. Aus der EP 441 196 A2 sind wässrige Polyurethandispersionen bekannt, die hergestellt werden, indem ein polymeres Polyurethan in einem organischen Lösungsmittel bereitgestellt wird, das Polyurethan neutralisiert wird, in Wasser dispergiert wird und das organische Lösungsmittel entfernt wird.

Für viele Anwendungen wie für Haftgrundierungen, insbesondere Haftgrundierungen auf Leder, sind Polyurethan ("PU")-Dispersionen wünschenswert, in denen die dispergierten PU Teilchen einen niedrigen mittleren Teilchendurchmesser aufweisen. Jedoch bedingt eine kleine Teilchengröße in vielen Fällen eine vergleichsweise hohe Viskosität der Dispersion. Dadurch werden PU-Dispersionen, in denen die Partikel eine kleine mittlere Teilchengröße aufweisen, oft aufgrund einer hohen Viskosität schwerer handhabbar als PU-Dispersionen mit demselben Feststoffgehalt und einer größeren Teilchengröße.

Jedoch ist es wünschenswert, dass PU-Dispersionen mit hohen Feststoffgehalten hergestellt werden, um den Einsatz von Ressourcen für den Transport und die Lagerung derselben möglichst klein zu halten.

Aufgabe der vorliegenden Erfindung war es daher, ein Verfahren zur Herstellung von PU-dispersionen bereit zu stellen, die eine niedrige Teilchengröße aufweisen und die sich einfach aus PU-Dispersionen mit hohem Feststoffgehalt erhalten lassen. Außerdem sollte das Verfahren zur Herstellung solcher PU-Dispersionen einfach auszuführen sein.

Die Aufgabe wurde gelöst durch ein Verfahren zur Herstellung von Polyurethandispersionen umfassend folgende Schritte:
A) Bereitstellen einer Lösung mindestens eines ionisierbare Gruppen tragenden polymeren Polyurethans in mindestens einem Lösemittel
B) partielle Neutralisation des mindestens einen ionisierbare Gruppen tragenden polymeren Polyurethans mit mindestens einem Neutralisationsmittel, wobei 1 bis 60 mol% der im polymeren Polyurethan enthaltenen ionisierbaren Gruppen neutralisiert werden,
C) Dispergierung des mindestens einen ionisierbare Gruppen tragenden polymeren Polyurethans in Wasser
D) Entfernen des mindestens einen Lösemittels
E) gegebenenfalls Verdünnung der Dispersion nach Entfernung des Lösemittels mit weiterem Wasser
F) Zugabe von Neutralisationsmittel nach Entfernen des Lösemittels.

Geeignete ionisierbare Gruppen tragenden polymere Polyurethane (im Folgenden auch als "polymere Polyurethane" oder "Polyurethane" bezeichnet) sind prinzipiell alle polymeren Polyurethane, die ionisierbare Gruppen tragen und die sich zu wässrigen Polyurethan- ("PU")-Dispersionen verarbeiten lassen. Verfahren zur Herstellung von Lösungen von Polyurethanen gemäß Schritt A) sind dem Fachmann an sich bekannt.

Beispielsweise können geeignete polymere Polyurethane folgende Komponenten enthalten oder aus folgenden Komponenten bestehen:
a) wenigstens einem organischen Diisocyanat oder einem eine arithmetisch mittlere NCO-Funktionalität von 1,9 bis 2,3 aufweisenden Gemisch aus organischen Isocyanaten [Monomere I],
b) wenigstens einem zweiwertigen Polyalkohol eines zahlenmittleren Molekulargewichtes von 500 bis 5000 oder einem eine arithmetisch mittlere Funktionalität an alkoholischen OH-Gruppen von 1,6 bis 2,3 aufweisenden Gemisch aus Polyalkoholen eines zahlenmittleren Molekulargewichtes von 500 bis 5000 [Monomere II],
c) wenigstens einem 1 bis 3 alkoholische OH-Gruppen sowie wenigstens eine ionisierbare Gruppe enthaltenden Alkohol [Monomere III],
d) keinem, einem oder mehreren zweiwertigen Alkoholen eines zahlenmittleren Molekulargewichtes von 62 bis 499 oder einem eine arithmetisch mittlere Funktionalität an alkoholischen OH-Gruppen von 1,9 bis 2,3 aufweisenden Gemisch aus Alkoholen eines zahlenmittleren Molekulargewichtes von 62 bis 499 [Monomere IV],
e) keinem, einem oder mehreren einwertigen Polyetheralkoholen [Monomere V] und
f) keinem, einem oder mehreren wenigstens zwei -N-H-Gruppen aufweisenden Polyaminen [Monomere VI].

Als Monomere I sind insbesondere sowohl aliphatische, aromatische als auch araliphatische Diisocyanate wie Tetramethylendiisocyanat, Hexamethylendiisocyanat, Dodecamethylendiisocyanat, 1 ,4-Diisocyanatocyclohexan, 4,4'-Di-(isocyanatocyclohexyl)-methan, Trimethylhexandiisocyanat, 1-Isocyanato-3,3,5-trimethyl-5-isocyanatomethylcyclohexan (Isophorondiisocyanat), 2,4-Diisocyanatotoluol, 2,6-Diisocyanatotoluol, Tetramethylxylylendiisocyanat, 1,4-Diisocyanatobenzol, 4,4'-Diisocyanatodiphenylmethan, p-Xylylendiisocyanat, sowie Isopropenyldimethyltoluylendiisocyanat von Interesse. Ferner kommen im Rahmen der Monomeren I die von diesen Diisocyanaten abgeleiteten, gegebenenfalls höherfunktionellen, Carbodiimid-, Allophanat-, Isocyanurat-, Urethan- und/oder Biuretgruppen enthaltenden Polyisocyanate sowie Monoisocyanate wie Phenylisocyanat, Cyclohexylisocyanat, Hexylisocyanat oder Dodecylisocyanat in Betracht. Bevorzugt werden 2,4- und 2,6-Diisocyanatotoluol und deren Gemische, Hexamethylendiisocyanat, 1-Isocyanato-3,3,5-trimethyl-5-isocyanatomethylcyclohexan sowie 4,4'-Di(isocyanatocyclohexyl)-methan verwendet. Für die Herstellung von unter Lichteinwirkung nicht vergilbenden Produkten werden vorzugsweise aliphatische Monomere I eingesetzt.

Als Diole (b) (Monomere II) kommen vornehmlich höhermolekulare Diole (b) in Betracht, die ein Molekulargewicht von etwa 500 bis 5000, vorzugsweise von etwa 1000 bis 3000 g/mol haben.

Bei den Diolen (b) handelt es sich zum Beispiel um Polyesterpolyole, die z.B. aus Ullmanns Enzyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Neopentylglykol sowie Alkohole der allgemeinen Formel
HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol.

Ferner kommen auch Polycarbonat-Diole, wie sie z.B. durch Umsetzung von Phosgen mit einem Überschuss von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die von Hydroxycarbonsäuren der allgemeinen Formel HO-(CH₂)_{z}-COOH, wobei z eine Zahl von 1 bis 20, bevorzugt eine ungerade Zahl von 3 bis 19 ist, abgeleitet sind, z.B. ε-Caprolacton, β-Propiolacton, γ-Butyrolacton und/oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 2,2-Bis(4-hydroxydiphenyl)-propan oder Anilin erhältlich. Besonders bevorzugt ist Polytetrahydrofuran mit einem Molekulargewicht von 500 bis 5000 g/mol, und vor allem 1000 bis 4500 g/mol.

Die Polyesterdiole und Polyetherdiole können auch als Gemische im Verhältnis 0,1 : 1 bis 1 : 9 eingesetzt werden.

Als Monomere II eignen sich insbesondere zweiwertige Polyetheralkohole wie sie z.B. durch Polymerisation von Ethylenoxid, Propylenoxid, Butylenoxid, Tetrahydrofuran, Styroloxid oder Epichlorhydrin mit sich selbst, z.B. in Gegenwart von geeigneten Katalysatoren wie Bortrifluorid, oder durch Anlagerung dieser Verbindungen, gegebenenfalls im Gemisch oder nacheinander, an Startkomponenten mit reaktionsfähigen Wasserstoffatomen, wie Amine oder Alkohole, erhältlich sind. Besonders geeignet sind als Monomere II Polyetherdiole, die wenigstens zu 70 Gew.% gleiche oder verschiedene Einheiten der Struktur 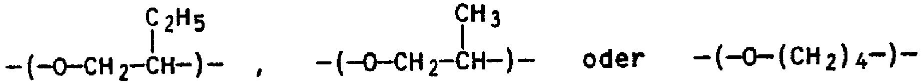 enthalten.

Als ionogene (ionisierbare) Gruppen der Monomeren III werden solche Gruppen betrachtet, die an sich oder nach geeigneter Abwandlung, z.B. durch Neutralisation oder Quarternisierung, in wässrigem Medium teilweise oder vollständig ionisiert vorliegen, wobei jedoch -N-H·Gruppen ausgenommen sind. Diese Abwandlung kann in der Regel vor, während und/oder nach der Herstellung des polymeren Polyurethans erfolgen. Vorzugsweise wird nach der Herstellung des polymeren Polyurethans abgewandelt.

Beispiele für ionogene Gruppen sind Säurefunktionen wie Carboxyl- oder Sulfonsäuregruppen, die durch Neutralisation mit Basen abgewandelt werden können, oder tertiäre Amine, die quarternisiert oder durch Säurezugabe in Ammonium-lonen überführt werden können. Zur Abwandlung ionogener Gruppen durch Neutralisation eignen sich anorganische oder organische Basen wie Alkalimetallhydroxide, Alkalimetallcarbonate, Alkalimetallhydrogencarbonate, Ammoniak oder primäre, sekundäre sowie bevorzugt tertiäre Amine, z.B. Triethylamin, Dimethylaminoethanol oder Dimethylaminopropanol, sowie anorganische oder organische Säuren wie Salzsäure, Essigsäure, Fumarsäure, Maleinsäure, Milchsäure, Weinsäure, Oxalsäure oder Phosphorsäure. Als Quarternisierungsmittel eignen sich Methyljodid, Methylchlorid, Dimethylsulfat, Benzylchlorid, Chloressigsäureethylester oder Bromacetamid.

Vorzugsweise werden als Monomere III 4 bis 10 C-Atome enthaltende Dihydroxycarbon-oder - sulfonsäuren, N-Alkyldialkanolamine wie N-Methyldiethanolamin oder N-Ethyldiethanolamin eingesetzt. Besonders bevorzugt sind 5 bis 10 C-Atome enthaltende Dihydroxycarbonsäuren der allgemeinen Formel 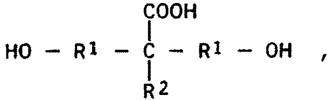 wobei R¹ eine Alkylen- und R² eine Alkylgruppe ist, insbesondere Dimethylolpropionsäure.

In vorteilhafter Weise liegen in erfindungsgemäß eingesetzten polymeren Polyurethanen in der wässrigen Zubereitung pro Gramm polymeren Polyurethans 0,1 bis 1,2 mMol der ionogenen Gruppen der eingebauten Monomeren III ionisiert vor.

Als Monomere IV kommen unter anderen 1,2-Ethandiol, 1,2-Propandiol, Butandiole, 1,4-Butendiol, 1,4-Butindiol, Pentandiole, Hexandiole, Octandiole, 1,4-Bishydroxymethylcyclohexan, 2,2-Bis-(4-hydroxycyclohexyl)-propan, 2-Methyl-1,3-propandiol, Glycerin, Trimethylolpropan, 1,2,6-Hexantriol, 1,2,4-Butantriol, Pentaerythrit, Sorbit, Diethylenglycol, Triethylenglycol, Tetraethylenglycol, Dipropylenglycol sowie Dibutylenglycol in Betracht.

Als gegebenenfalls mitzuverwendende Monomere V sind solche einwertigen Polyetheralkohole von besonderem Interesse, deren zahlenmittleres Molekulargewicht Mₙ 500 bis 10.000, vorzugsweise 1000 bis 5000 beträgt. Sie sind beispielsweise durch Alkoxylierung von einwertigen Alkanolen wie Methanol, Ethanol oder n-Butanol erhältlich, wobei als Alkoxylierungsmittel z.B. Ethylenoxid oder Propylenoxid verwendet werden. Vorzugsweise beträgt der Ethoxylierungsgrad der Monomeren V mehr als 60 Gew.%.

Die Monomeren VI weisen vorzugsweise ein Molekulargewicht von 32 bis 500 auf. Beispiele für geeignete Monomere VI sind Diamine wie 1,2-Diaminoethan, 1,6-Diaminohexan, Piperazin, 2,5-Dimethylpiperazin, 1-Amino-3-aminomethyl-3,5,5-trimethylcyclohexan (Isophorondiamin), 4,4'-Di-(aminocyclohexyl)-methan, 1,4-Diaminocyclohexan, 1,2- und 1,3-Diaminopropan, Hydrazin, Hydrazinhydrat, Triamine wie Diethylentriamin oder Tetramine wie N,N'Bis(3-aminopropyl)-1,4-diaminobutan. Als Monomere VI kommen aber auch Ketimine wie sie in der DE-B-27 25 589 beschrieben sind, Ketazine, wie diejenigen der DE-B-28 11 148 und der US-A 4 269 748, Aminsalze wie diejenigen in der US-A 4 292 226 oder Oxazolidine wie sie in der DE-B-27 32 131 und der US-A 4 192 937 beschrieben werden, in Betracht. Hierbei handelt es sich um verkappte Polyamine, aus denen in Gegenwart von Wasser intermediär die entsprechenden Polyamine freigesetzt werden. Als Monomere VI sind insbesondere auch solche Polyamine geeignet, die eine oder mehrere alkoholische Hydroxylgruppen tragen. Vorzugsweise enthalten die erfindungsgemäß eingesetzten polymeren Polyurethane keine Monomeren VI eingebaut.

Weitere Beispiele von für den Aufbau der polymeren Polyurethane geeigneten Monomeren I bis VI sind z.B. in High Polymers, Vol. XVI, "Polyurethanes, Chemistry and Technology", Interscience Publishers, New York, Bd. 1, 1962, S. 32 bis 42, S. 44 bis 54 und Bd. II, 1964, S. 5 bis 6 und S. 198 bis 199 beschrieben.

Vorzugsweise enthalten die erfindungsgemäß eingesetzten polymeren Polyurethane nur solche Monomere I bis IV eingebaut, die zwei Isocyanatgruppen oder zwei alkoholische OH-Gruppen aufweisen. Die Mengen der eingebauten Monomeren I bis VI werden mit Vorteil so bemessen, daß das NCO/(OH +-N-H)-Äquivalentverhältnis für die eingebauten Monomeren I, die OH-Gruppen der eingebauten Monomeren II bis V sowie die -N-H-Gruppen der eingebauten Monomeren VI 0,95 bis 1,0 beträgt.

In einer bevorzugten Ausführungsform der Erfindung sind die Mengen der eingebauten Monomeren I bis VI so bemessen, daß die OH/NCO-Äquivalentverhältnisse für die eingebauten

| | |
|---|---|
| Monomere II / Monomere I | 0,2 bis 0,6 |
| Monomere III / Monomere I | 0,2 bis 0,8 |
| Monomere IV / Monomere I | 0 bis 0,2 und |
| Monomere V / Monomere I | 0 bis 0,2 |

und das N·H/NCO-Äquivalentverhältnis der eingebauten

| | |
|---|---|
| Monomere VI / Monomere I | 0 bis 0,1 |

beträgt, daß die arithmetisch mittlere Funktionalität der insgesamt eingebauten Monomeren I bis V, gemittelt über die Summe aus den NCO-Gruppen der Monomeren I und den alkoholischen OH-Gruppen der Monomeren II bis V 1,8 bis 2,3 beträgt, daß das NCO/(OH + -NH)·Äquivalentverhältnis für die eingebauten Monomeren I, die OH-Gruppen der eingebauten Monomeren II bis V sowie die -N-H-Gruppen der eingebauten Monomeren VI 0,9 bis 1,0 beträgt und im Fall des Miteinbaus von Monomeren VI zugleich das NCO/OH-Äquivalentverhältnis für die eingebauten Monomeren I und die Summe der eingebauten Monomeren II bis V größer als 1 ist, daß die Monomeren II einen Ethoxylierungsgrad von weniger als 30 Gew.% aufweisen, daß die Monomeren V einen Ethoxylierungsgrad von wenigstens 40 Gew.% aufweisen und daß pro Gramm polymeren Polyurethans in der wässrigen Zubereitung 0,05 bis 2 mMol der ionogenen Gruppen der eingebauten Monomeren III ionisiert vorliegen.

Bevorzugte Lösungsmittel sind solche, die die verwendeten polymeren Polyurethane vollständig lösen können. Geeignete Lösungsmittel sind zum Beispiel Aceton, Butanon, Tetrahydrofuran, N-Methylpyrrolidon oder N-Ethylpyrrolidon. Das polymere Polyurethan wird in der Regel in Abwesenheit von Wasser hergestellt.

In einer bevorzugten Ausführungsform wird das Lösungsmittel in einem späteren Schritt D) nach Dispergierung des polymeren Polyurethans in Wasser destillativ entfernt. In einer bevorzugten Ausführungsform werden daher Lösungsmittel verwendet, die einen Siedepunkt haben, der unter dem von Wasser liegt.

Bevorzugte Lösungsmittel sind Aceton, Tetrahydrofuran und Butanon. Besonders bevorzugt ist Aceton.

In der Regel werden die Komponenten a) bis f) sowie ihre jeweiligen Molmengen so gewählt, dass das Verhältnis NCO: RG mit
- NCO: der Molmenge an Isocyanatgruppen und
- RG: der Summe aus der Molmenge der funktionellen Gruppen, die mit Isocyanaten in einer Additionsreaktion reagieren können
1 : 1 bis 3 : 1, bevorzugt 1,05 : 1 bis 2:1, besonders bevorzugt 1,1 : 1 bis 1,5 : 1 beträgt.

In einer bevorzugten Ausführungsform liegt das Verhältnis NCO : RG möglichst nahe an 1 : 1.

Die Polyaddition der Komponenten a) bis f) erfolgt im Allgemeinen bei Reaktionstemperaturen von 20 bis 180 °C, bevorzugt 40 bis 150 °C, besonders bevorzugt 50 bis 100 °C unter Normaldruck oder einem Druck bis zu 10 bar.

Die erforderlichen Reaktionszeiten können sich über wenige Minuten bis einige Stunden erstrecken. Es ist auf dem Gebiet der Polyurethanchemie bekannt, wie die Reaktionszeit durch eine verschiedene Parameter wie Temperatur, Konzentration der Monomere, Reaktivität der Monomeren oder Anwesenheit von Katalysatoren beeinflusst wird.

Zur Beschleunigung der Reaktion der Diisocyanate können die üblichen Katalysatoren mitverwendet werden. Dafür kommen prinzipiell alle in der Polyurethanchemie üblicherweise verwendeten Katalysatoren in Betracht.

Diese sind beispielsweise organische Amine, insbesondere tertiäre aliphatische, cycloaliphatische oder aromatische Amine, und/oder Lewis-saure organische Metallverbindungen. Als Lewis-saure organische Metallverbindungen kommen z.B. Zinnverbindungen in Frage, wie beispielsweise Zinn-(II)-salze von organischen Carbonsäuren, z.B. Zinn(II)-acetat, Zinn(II)-octoat, Zinn(II)-ethylhexoat und Zinn(II)-laurat und die Dialkylzinn(IV)-salze von organischen Carbonsäuren, z.B.Dimethylzinn-diacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Auch Metallkomplexe wie Acetylacetonate des Eisens, Titans, Aluminiums, Zirkons, Mangans, Nickels und Cobalts sind möglich. Weitere Metallkatalysatoren werden von Blank et al. in Progress in Organic Coatings, 1999, Vol. 35, Seiten 19-29 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Diocytzinn-dilaurat, Zirkon-Acetylacetonat und Zirkon-2,2,6,6-tetramethyl-3,5-heptandionat.

Auch Wismut-und Cobaltkatalysatoren sowie Cäsiumsalze können als Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄₋, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist.

Das im Schritt A) hergestellte beziehungsweise verwendete polymere Polyurethan weist in der Regel bis zu 10 Gew.-%, bevorzugt bis zu 5 Gew.-%, besonders bevorzugt bis zu 2 Gew% nicht abreagierte NCO-Gruppen auf. In einer Ausführungsform weist das im Schritt A) hergestellte beziehungsweise verwendete polymere Polyurethan bis zu 1 Gew% oder bis zu 0,5 Gew% nicht abreagierte NCO-Gruppen auf.

Gemäß Schritt A) bereitgestellte gelöste polymere Polyurethane tragen ionisierbare Gruppen. Geeignete ionisierbare Gruppen sind zum Beispiel solche, die in Monomer III enthalten sind, wie zum Beispiel Säurefunktionen wie Carboxyl- oder Sulfonsäuregruppen, die zusätzlich durch Neutralisation mit Basen abgewandelt werden können, oder tertiäre Amine.

Bevorzugte ionisierbare Gruppen sind Carboxyl- oder Sulfonsäuregruppen.

Erfindungsgemäß werden die im polymeren Polyurethan enthaltenen ionisierbaren Gruppen partiell neutralisiert. Es werden 1 bis 60 mol% der im polymeren Polyurethan enthaltenen ionisierbaren Gruppen neutralisiert.

Saure ionisierbare Gruppen wie Carboxyl- oder Sulfonsäuregruppen werden in der Regel durch basische Neutralisationsmittel neutralisiert.

Geeignete basische Neutralisationsmittel sind zum Beispiel anorganische oder organische Basen. Geeignete anorganische Basen sind zum Beispiel Alkalimetallhydroxide wie Natriumhydroxid, Alkalimetallcarbonate wie Natriumcarbonat, Alkalimetallhydrogencarbonate wie Natriumhydrogencarbonate oder Ammoniak.

Bevorzugte Basen sind organische Basen. Bevorzugte organische Basen sind primäre oder sekundäre sowie besonders bevorzugt tertiäre Amine, wie zum Beispiel Triethylamin, Dimethylaminoethanol oder Dimethylaminopropanol. Insbesondere bevorzugt ist Triethylamin.

Es ist auch möglich, Mischungen von Basen zu verwenden.

Basische ionisierbare Gruppen werden zum Beispiel durch saure Neutralisationsmittel neutralisiert und dadurch ionisiert.

Geeignete saure Neutralisationsmittel sind zum Beispiel anorganische oder organische Säuren wie Salzsäure, Essigsäure, Fumarsäure, Maleinsäure, Milchsäure, Weinsäure, Oxalsäure oder Phosphorsäure.

Tertiäre Aminogruppen können zum Beispiel durch geeignete Quarternisierungsmittel quarternisiert werden. Auch dieser Vorgang wird im Rahmen dieser Anmeldung als Neutralisation bezeichnet.

Als Quarternisierungsmittel eignen sich zum Beispiel Methyljodid, Methylchlorid, Dimethylsulfat, Benzylchlorid, Chloressigsäureethylester oder Bromacetamid.

Nach Bereitstellung des polymeren Polyurethans sowie während oder nach der partiellen Neutralisation wird das polymere Polyurethan in Wasser dispergiert. Dieses erfolgt nach dem Fachmann bekannten Verfahren durch Zugabe von Wasser und Durchmischen des Gemisches, zum Beispiel mit geeigneten Rührern.

Es ist dabei zum Beispiel möglich, ein partiell neutralisiertes polymeres Polyurethan in Wasser zu geben. Eine andere Möglichkeit ist es, ein nicht oder partiell neutralisiertes polymeres Polyurethan in Wasser zu geben, das ein Neutralisationsmittel enthält.

In einer weniger bevorzugten Ausführungsform der Erfindung verbleibt das mindestens eine Lösungsmittel in der PU-Dispersion.

In einer bevorzugten Ausführungsform wird nach Dispergierung des polymeren Polyurethans das eingesetzte mindestens eine Lösungsmittel aus der PU-Dispersion entfernt. In der Regel erfolgt dieses destillativ.

Die so erhaltenen PU-Dispersionen weisen bevorzugt einen relativ hohen Feststoffgehalt auf. Bevorzugt weisen so erhaltene PU Dispersionen einen Feststoffgehalt von 10 bis 60 Gew%, besonders bevorzugt 20 bis 50 Gew%, insbesondere bevorzugt 25 bis 40 Gew% auf.

Die in den Zubereitungen enthaltenen polymeren Polyurethane weisen in N,N-Dimethylformamid (DMF) in der Regel einen K-Wert von 20 bis 60 auf. Der K-Wert ist eine relative Viskositätszahl, die in Analogie zur DIN 53 726 bei 25 °C bestimmt wird. Er enthält die Fließgeschwindigkeit einer 1 Gew.%igen Lösung des Polyurethans in DMF, relativ zur Fließgeschwindigkeit von reinem DMF und charakterisiert das mittlere Molekulargewicht des Polyurethans.

In einer bevorzugten Ausführungsform werden die so erhaltenen PU-Dispersionen vor Zugabe weiteren Neutralisationsmittels mit weiterem Wasser verdünnt. Die Verdünnung mit weiterem Wasser in Schritt E) kann prinzipiell zu jedem Zeitpunkt nach der Dispergierung des polymeren Polyurethans in Wasser gemäß Schritt C) geschehen. Bevorzugt wird Schritt E) zwischen den Schritten C) und F) durchgeführt.

In einer bevorzugten Ausführungsform der Erfindung wird das erfindungsgemäße Verfahren derart ausgeführt, dass eine PU-Dispersion mit einem hohen Feststoffgehalt hergestellt wird, diese in dieser Form gegebenenfalls gelagert und an den Ort der Verwendung transportiert wird und erst kurz vor der Verwendung gemäß Schritt E) verdünnt wird. Der Zeitraum zwischen den Schritten C) und E) als auch zwischen E) und F) sowie der Verwendung der PU-Dispersion ist nicht kritisch. In einer Ausführungsform der Erfindung wird Schritt E) kurz vor der Verwendung der nach dem erfindungsgemäßen Verfahren hergestellten PU Dispersion durchgeführt. Schritt E) kann zum Beispiel bis zu einer Stunde, drei Stunden, sechs Stunden, 10 Stunden oder 24 Stunden vor der Verwendung der nach dem erfindungsgemäßen Verfahren hergestellten PU Dispersion durchgeführt werden. Es ist auch möglich Schritt E) bis zu zwei Tage, drei Tage, vier Tage oder eine Woche vor der Verwendung der nach dem erfindungsgemäßen Verfahren hergestellten PU Dispersion durchzuführen. In einer anderen Ausführungsform wird Schritt E) bis zu zwei Wochen, drei Wochen, vier Wochen oder einen Monat vor der Verwendung der nach dem erfindungsgemäßen Verfahren hergestellten PU Dispersion durchgeführt. In einer anderen Ausführungsform wird Schritt E) bis zu zwei Monate, drei Monate, vier Monate oder ein Jahr oder zwei Jahre vor der Verwendung der nach dem erfindungsgemäßen Verfahren hergestellten PU Dispersion durchgeführt.

Erfindungsgemäß wird zu der gemäß den Schritten A) bis E) hergestellten PU-Dispersion weiteres Neutralisationsmittel zugegeben. Geeignete Neutralisationsmittel sind prinzipiell die gleichen wie für Schritt B). Hierbei kann in Schritt F) dasselbe mindestens eine Neutralisationsmittel verwendet werden wie in Schritt B). Es ist ebenfalls möglich in Schritt F) mindestens ein anderes Neutralisationsmittel als in Schritt B) zu verwenden.

Bevorzugt wird in Schritt F) Natriumhydroxid, Ammoniak oder Triethylamin verwendet.

In einer bevorzugten Ausführungsform wird in Schritten B) und F) Triethylamin als Base verwendet.

In einer anderen Ausführungsform wird in Schritt B) Triethylamin als Base verwendet und in Schritt F) Ammoniak.

In einer anderen Ausführungsform wird in Schritt B) Triethylamin als Base verwendet und in Schritt F) Natriumhydroxid.

In der Regel wird in Schritt F) so viel Neutralisationsmittel zugegeben, dass mindestens 50 % der im polymeren Polyurethan vorhandenen ionisierbaren Gruppen neutralisiert werden. Bevorzugt liegen nach Schritt F) mindestens 60%, besonders bevorzugt mindestens 70 und insbesondere bevorzugt mindestens 80% der im polymeren Polyurethan vorhandenen ionisierbaren Gruppen in ionischer Form vor.

In einer Ausführungsform der Erfindung wird in Schritt F) so viel Neutralisationsmittel zugegeben, dass alle im polymeren Polyurethan vorhandenen ionisierbaren Gruppen in ionischer Form vorliegen.

Bevorzugt wird das erfindungsgemäße Verfahren derart ausgeführt, dass die Schritte C) bis F) in der oben angegebenen Reihenfolge ausgeführt werden. In einer Ausführungsform werden die Schritte A) bis F) in der angegebenen Reihenfolge ausgeführt.

Durch das erfindungsgemäße Verfahren ist es möglich, PU-Dispersionen (PU Zubereitungen) mit einem hohen Feststoffanteil, die eine vergleichsweise große Teilchengröße aufweisen, zu einem beliebigen Zeitpunkt in PU-Dispersionen umzuarbeiten, die eine geringere Teilchengröße aufweisen.

Beispielsweise können PU-Dispersionen mit einem hohen Feststoffanteil hergestellt, gegebenenfalls gelagert und zum Beispiel zu ihrem Bestimmungsort transportiert werden. Vor Ort kann die PU-Dispersion dann verdünnt und durch Zugabe von weiterem Neutralisationsmittel in eine PU-Dispersion mit geringerem Teilchendurchmesser umgearbeitet werden.

Beispielsweise kann eine PU-Dispersion mit einem mittleren Teilchendurchmesser (Zahlenmittel, bestimmt durch dynamische Lichtstreuung) von 50 bis 200 nm und einem Feststoffgehalt von 25 bis 40 Gew% in eine PU Dispersion mit einem mittleren Teilchendurchmesser von 5 bis 45 nm und einem Feststoffgehalt von 10 bis 24 Gew% umgearbeitet werden. Es ist dabei möglich, die Viskosität in einem Bereich zu halten, der sich gut für die weitere Verarbeitung eignet, zum Beispiel von 5 bis 200 mPas (Rotationsviskosimetrie, bestimmt wie in den Beispielen zu dieser Anmeldung).

Eine weitere Eigenschaft des erfindungsgemäßen Verfahrens ist, dass es sich sehr einfach ausführen lässt. Herkömmliche Verfahren zur Herstellung von PU-Dispersionen haben den Nachteil, dass sie während der Herstellung, insbesondere während des destillativen Entfernens einzelner Komponenten wie Lösungsmitteln wie Aceton, Butanon oder Tetrahydrofuran, eine starke Neigung zum Schäumen aufweisen. Dieses führt häufig dazu, dass die Raum-Zeit-Ausbeute der verwendeten Apparate gemindert wird oder dass der PU-Dispersion Entschäumer als Additive zugesetzt werden müssen.

Es hat sich sehr überraschend gezeigt, dass das erfindungsgemäße Verfahren eine sehr geringe Neigung zum Schäumen hat. Hierdurch kann der Einsatz von Entschäumern stark reduziert werden oder ganz unterbleiben. Außerdem lässt sich die Raum-Zeit Ausbeute der verwendeten Apparate gegenüber Verfahren nach dem Stand der Technik steigern.

PU-Dispersionen, die nach dem erfindungsgemäßen Verfahren hergestellt worden sind, eignen sich beispielsweise als Haftgrundierung für handelsübliche Zurichtungen auf gefetteten und/oder hydrophobierten Ledern. Bemerkenswerterweise wird dabei die Wirkung der Fettung und/oder Hydrophobierung nicht wesentlich gemindert. Die Mitverwendung niedermolekularer Additive ist nicht erforderlich.

Zweckmäßigerweise werden die erfindungsgemäßen wässrigen Zubereitungen mit einem Feststoffgehalt von 1 bis 20 Gew.-% auf die Leder aufgetragen.

Das Aufbringen kann in an sich bekannter Weise durch Plüschen, Gießen, Spritzen oder Drucken erfolgen. Anschließend wird die Haftgrundierung, in der Regel bei Temperaturen von 60 bis 80 °C getrocknet. Die Auftragsmenge beträgt üblicherweise 1 bis 15 g Trockenmasse pro Quadratmeter. Im Anschluss an die Haftgrundierung wird in an sich bekannter Weise die Zurichtung aufgebracht. Die Zurichtung besteht in der Regel aus mehreren Schichten und wird modischen Erfordernissen entsprechend üblicherweise durch Anfärben mit Pigmenten und/oder löslichen Farbstoffen farbig aufgebracht. Neben diesen farbigen Bestandteilen enthalten die Zubereitungen für die Zurichtung im allgemeinen Bindemittel, z.B. auf der Basis von Polymerisatlösungen oder -dispersionen, sowie Hilfsmittel wie Weichmacher oder Härter, glanzsteigernde oder mattierende Zusätze, Mittel zur Griffverbesserung, Bügelhilfsmittel oder Verlaufshilfsmittel. Häufig gliedert sich der Aufbau einer Zurichtung in eine oder mehrere Zurichtungsgrundschichten, sowie daran

anschließend eine oder mehrere Abschlussschichten (Appretur). Nach dem Auftragen der einzelnen Schichten wird in der Regel getrocknet und gegebenenfalls gebügelt.

Alternativ zu der beschriebenen Ausführungsweise, kann die Lederzurichtung auch so erfolgen, daß die Haftgrundzubereitung nicht für sich, sondern mit der Zubereitung für die erste Zurichtungsgrundschicht gemischt, auf das Leder aufgebracht wird.

### Beispiele

### Messungen

NCO-Gehalte wurden volumetrisch gemäß DIN-EN ISO 11909 bestimmt.

Die Bestimmung der Feststoffgehalte erfolgte nach DIN-EN ISO 3251.

Die Teilchengrößen wurden über dynamische Lichtstreuung in einem Malvern Zetasizer APS bestimmt.

Die angegebenen Viskositäten wurden mittels Rotationsviskosimetrie nach DIN 53019 bei 23 °C bei einer Drehgeschwindigkeit von 500/s mit einem Rotationsviskosimeter der Firma Anton Paar Germany GmbH, Ostfildern, DE bestimmt.

### Abkürzungen

- DBTL: Dibutylzinndilaurat
- DMPA: Dimethylolpropionsäure
- Lupranol 1000: Polypropylenoxid, Molgewicht 2000 g/mol
- TDI: Toluylendiisocyanat, 20% 2,6 Isomer, 80% 2,4-Isomer
- TEA: Triethylamin

### Vergleichsbeispiel 1

Eine Mischung aus 87,1 g (0,50 mol) TDl, 400 g (0,20 mol) Lupranol 1000, 40,2 g (0,30 mol) DMPA und 0,2 g DBTL wurde während 5,5 Stunden bei 95°C umgesetzt. Anschließend wurde auf 30°C abgekühlt und der Gehalt an NCO-Gruppen bestimmt: 0,26 Gew.%, bezogen auf die Reaktionsmischung. Dann wurde mit 400 g Aceton verdünnt und 29,1 g (0,29 mol, entspricht 96 mol%, bezogen auf DMPA) TEA sowie 1750 g Wasser eingerührt.

Zur Destillation wurde die acetonhaltige Dispersion auf 50°C erwärmt und langsam der Druck abgesenkt, bis 100 mbar erreicht waren.

Die Destillation war wegen starken Schäumens nicht durchführbar, es mussten 5 Tropfen Entschäumer Silicone Antifoam der Fa. Aldrich zugesetzt werden. Danach konnte die Destillation innerhalb von 1,5 Stunden durchgeführt werden.

Es wurden 2380 g einer feinteiligen PUD mit einem Feststoffgehalt von 23,4 Gew.% erhalten.

### Beispiel 2

Eine Mischung aus 87,1 g (0,50 mol) TDl, 400 g (0,20 mol) Lupranol 1000, 40,2 g (0,30 mol) DMPA und 0,2 g DBTL wurde während 5,5 Stunden bei 95°C umgesetzt. Anschließend wurde auf 30°C abgekühlt und der Gehalt an NCO-Gruppen bestimmt: 0,26 Gew.%, bezogen auf die Reaktionsmischung. Dann wurde mit 400 g Aceton verdünnt und 12,1 g (0,12 mol, entspricht 40 mol%, bezogen auf DMPA) TEA sowie 1250 g Wasser eingerührt.

Zur Destillation wurde die acetonhaltige Dispersion auf 50°C erwärmt und langsam der Druck abgesenkt, bis 100 mbar erreicht waren.

Es wurden 1730 g einer feinteiligen PUD mit einem Feststoffgehalt von 31,2 Gew.% erhalten.

Bei der Destillation trat nur wenig Schäumen auf, die Destillation konnte innerhalb von 1,5 Stunden durchgeführt werden. Die Verwendung von Entschäumer war nicht nötig.

Zu der destillierten Dispersion wurden 17,7 g (0,17 mol, entspricht 56,6 mol%, bezogen auf DMPA) gegeben. Der Gesamtgehalt an TEA betrug somit 29,8 g (0,29 mol, entspricht 96 mol% bezogen auf DMPA.

Es wurden 2440 g einer feinteiligen PUD mit einem Feststoffgehalt von 22,8 Gew.% erhalten.

| | Vergleichsbeispiel 1 | Beispiel 2 |
|---|---|---|
| Feststoffgehalt nach Zugabe von TEA (Gew.%) | 23,4 | |
| Teilchengröße nach Zugabe von TEA (nm) | 17,3 | |
| Viskosität nach Zugabe von TEA (mPas bei 500/s, 25°C) | 56 | |
| Feststoffgehalt nach der ersten Zugabe von TEA (Gew.%) | | 31,2 |
| Teilchengröße nach der ersten Zugabe von TEA (nm) | | 110 |
| Viskosität nach der ersten Zugabe von TEA (mPas bei 500/s, 23°C) | | 11 |
| Feststoffgehalt nach der zweiten Zugabe von TEA (Gew.%) | | 22,8 |
| Teilchengröße nach der zweiten Zugabe von TEA (nm) | | 13,5 |
| Viskosität nach der zweiten Zugabe von TEA (mPas bei 500/s, 23°C) | | 43 |

Das Beispiel zeigt, dass durch das erfindungsgemäße Verfahren nach der ersten Neutralisation nur 73% der Masse zu transportieren und zu lagern sind, die nach dem Vergleichsbeispiel erhalten werden. Nach der zweiten Neutralisation wird ein Produkt erhalten, das dem nach dem Stand der Technik hergestellten voll und ganz entspricht.

Die Raumausbeute des Reaktors ist in erfindungsgemäßen Verfahren verbessert und es kann auf den Einsatz von Entschäumer verzichtet werden.

## Patentansprüche

1. Verfahren zur Herstellung von wässrigen Polyurethanzubereitungen, umfassend folgende Schritte:
A) Bereitstellen einer Lösung mindestens eines ionisierbare Gruppen tragenden polymeren Polyurethans in mindestens einem Lösemittel
B) partielle Neutralisation des mindestens einen ionisierbare Gruppen tragenden polymeren Polyurethans mit mindestens einem Neutralisationsmittel, wobei 1 bis 60 mol% der im polymeren Polyurethan enthaltenen ionisierbaren Gruppen neutralisiert werden,
C) Dispergierung des mindestens einen ionisierbare Gruppen tragenden polymeren Polyurethans in Wasser
D) Gegebenenfalls Entfernen des mindestens einen Lösemittels
E) Gegebenenfalls Verdünnung der Mischung nach Entfernung des Lösemittels mit weiterem Wasser
F) Zugabe von Neutralisationsmittel nach Entfernen des Lösemittels.

2. Verfahren nach Anspruch 1, wobei die Schritte C) bis F) in der angegebenen Reihenfolge ausgeführt werden.

3. Verfahren nach einem der vorstehenden Ansprüche, wobei es sich bei der mindestens einen ionisierbaren Gruppe um eine Carboxylgruppe oder Sulfonsäuregruppe handelt.

4. Verfahren nach einem der vorstehenden Ansprüche, wobei das polymere Polyurethan mindestens ein Carboxylgruppen tragendes Polyol enthält.

5. Verfahren nach einem der vorstehenden Ansprüche, wobei es sich bei dem mindestens einen Neutralisationsmittel um eine organische Base handelt.

6. Verfahren nach einem der vorstehenden Ansprüche, wobei es sich bei dem mindestens einen Neutralisationsmittel um ein Amin handelt.

7. Verfahren nach einem der vorstehenden Ansprüche, wobei es sich bei dem mindestens einen Neutralisationsmittel um Triethylamin handelt.

8. Verfahren nach einem der vorstehenden Ansprüche, wobei Aceton als Lösemittel verwendet wird.

9. Verwendung von Polyurethandispersionen, hergestellt nach mindestens einem der Ansprüche 1 bis 8, zur Herstellung von Leder.

10. Verwendung von Polyurethandispersionen, hergestellt nach mindestens einem der Ansprüche 1 bis 8, als Haftgrundierung in der Herstellung von Leder.

## Claims

1. A process for producing aqueous polyurethane preparations, which comprises the steps of:
A) providing a solution in at least one solvent of at least one polymeric polyurethane bearing ionizable groups,
B) using at least one neutralizing agent to partially neutralize the at least one polymeric polyurethane bearing ionizable groups, where 1 to 60 mol% of the ionizable groups present in the polymeric polyurethane are neutralized,
C) dispersing the at least one polymeric polyurethane bearing ionizable groups in water,
D) optionally removing the at least one solvent,
E) optionally diluting the mixture after solvent removal with further water,
F) admixing neutralizing agent after solvent removal.

2. The process according to claim 1 wherein said steps C) to F) are carried out in the stated order.

3. The process according to either preceding claim wherein the at least one ionizable group is a carboxyl group or is a sulfonic acid group.

4. The process according to any preceding claim wherein the polymeric polyurethane comprises at least one polyol bearing carboxyl groups.

5. The process according to any preceding claim wherein the at least one neutralizing agent is an organic base.

6. The process according to any preceding claim wherein the at least one neutralizing agent is an amine.

7. The process according to any preceding claim wherein the at least one neutralizing agent is triethylamine.

8. The process according to any preceding claim wherein acetone is used as solvent.

9. The method of using polyurethane dispersions obtained according to at least one of claims 1 to 8 in the manufacture of leather.

10. The method of using polyurethane dispersions obtained according to at least one of claims 1 to 8 as adhesion primer in the manufacture of leather.

## Revendications

1. Procédé de fabrication de préparations aqueuses de polyuréthane, comprenant les étapes suivantes :
A) la préparation d'une solution d'au moins un polyuréthane polymère portant des groupes ionisables dans au moins un solvant,
B) la neutralisation partielle dudit au moins un polyuréthane polymère portant des groupes ionisables avec au moins un agent de neutralisation, 1 à 60 % en moles des groupes ionisables contenus dans le polyuréthane polymère étant neutralisés,
C) la dispersion dudit au moins un polyuréthane polymère portant des groupes ionisables dans de l'eau,
D) éventuellement l'élimination dudit au moins un solvant,
E) éventuellement la dilution du mélange après l'élimination du solvant avec de l'eau supplémentaire,
F) l'ajout d'agents de neutralisation après l'élimination du solvant.

2. Procédé selon la revendication 1, dans lequel les étapes C) à F) sont réalisées dans l'ordre indiqué.

3. Procédé selon l'une quelconque des revendications précédentes, dans lequel ledit au moins un groupe ionisable consiste en un groupe carboxyle ou un groupe acide sulfonique.

4. Procédé selon l'une quelconque des revendications précédentes, dans lequel le polyuréthane polymère contient au moins un polyol portant des groupes carboxyle.

5. Procédé selon l'une quelconque des revendications précédentes, dans lequel ledit au moins un agent de neutralisation consiste en une base organique.

6. Procédé selon l'une quelconque des revendications précédentes, dans lequel ledit au moins un agent de neutralisation consiste en une amine.

7. Procédé selon l'une quelconque des revendications précédentes, dans lequel ledit au moins un agent de neutralisation consiste en la triéthylamine.

8. Procédé selon l'une quelconque des revendications précédentes, dans lequel l'acétone est utilisée en tant que solvant.

9. Utilisation de dispersions de polyuréthane, fabriquées selon au moins l'une quelconque des revendications 1 à 8, pour la fabrication de cuir.

10. Utilisation de dispersions de polyuréthane, fabriquées selon au moins l'une quelconque des revendications 1 à 8, en tant que couche de fond adhésive dans la fabrication de cuir.
